# EUROPEAN PATENT SPECIFICATION

(11) **EP 3 098 489 B1**
(45) Date of publication and mention of the grant of the patent: **31.07.2019**
(21) Application number: 15191997.4
(22) Date of filing: 29.10.2015
(51) Int. Cl.: F16K 1/36, F16K 31/06, F03D 9/00, F03D 15/00

(54) **ANNULAR VALVE AND POWER GENERATING APPARATUS OF RENEWABLE-ENERGY TYPE**
RINGVENTIL UND VORRICHTUNG ZUR ERZEUGUNG VON STROM AUS ERNEUERBAREN ENERGIEN
VANNE ANNULAIRE ET APPAREIL DE GÉNÉRATION D'ÉNERGIE RENOUVELABLE

(30) Priority: 29.05.2015 JP 2015109740
(43) Date of publication of application: 30.11.2016
(73) Proprietor: MITSUBISHI HEAVY INDUSTRIES, LTD., Tokyo 108-8215 (JP)
(72) Inventor: NOGUCHI, Toshihide, TOKYO, 108-8215 (JP); HIRANO, Haruhiko, TOKYO, 108-8215 (JP); KAWABATA, Shinji, TOKYO, 108-8215 (JP); SHIMIZU, Masayuki, TOKYO, 108-8215 (JP); HAYASHI, Toshikazu, TOKYO, 108-8215 (JP); NAKAYAMA, Shin, TOKYO, 108-8215 (JP); MCINTYRE, Fergus, LOTHIAN, EH20 9TB (GB)
(74) Representative: Intès, Didier Gérard André

(56) References cited:
- EP-A1- 2 187 104
- EP-A1- 2 679 820
- EP-A1- 2 770 202
- WO-A1-2012/118757
- DE-A1-102010 043 641
- DE-U1-202014 006 876

## Description

### TECHNICAL FIELD

The present disclosure relates to an annular valve and a power generating apparatus of renewable-energy type.

### BACKGROUND ART

Generally, an annular valve for opening and closing a flow channel formed in an annular shape is known. An annular valve is disposed in an annular hydraulic flow channel communicating with a working chamber in a hydraulic machine, for instance, and configured to be opened and closed so as to control inflow and outflow of working oil with respect to the working chamber.

For instance, Patent Documents 1 to 4 disclose an annular valve including a rod, a valve body configured to be movable along with the rod, and a valve seat configured such that the valve body is capable of contacting the valve seat at radially inside and outside of an annular opening.

In such an annular valve, the contacting surface between the valve body and the valve seat in the seating position has an annular shape at each of the radially inner side and the radially outer side of the annular opening. Thus, to enable secure closure of the annular opening when the valve is to be closed, at least one of the valve body or the valve seat normally includes a sealing ridge (radially-outer sealing ridge and radially-inner sealing ridge) where the cross section of the contacting surface is curved so that a middle portion in the radial direction of the contacting surface having an annular shape protrudes toward the other one of the valve body or the valve seat.

### Citation List

### Patent Literature

Patent Document 1: WO2010/057494A
Patent Document 2: WO2010/073040A
Patent Document 3: US2011/0220230A
Patent Document 4: WO2013/118182A

### SUMMARY

In the above described annular valve, if the flow rate in the annular flow channel is large, unstable behaviors may occur, such as delay in motion of the valve (e.g. delay in closure or opening of the valve) and unintended motion of the valve. Further, due to the unstable behaviors of the valve or the flow of fluid, the valve may get damaged. Especially in an annular valve of a large size, the flow rate of fluid flowing through the annular flow channel is large, which increases the risk of unstable behaviors of the valve or damage to the valve. Thus, conventional designs may fail to provide sufficient performance.

An object of at least some embodiments of the present invention is to provide an annular valve and a power generating apparatus of renewable-energy type whereby it is possible to restrict unstable behaviors of the valve and damage to the valve. US 2011/0175004 A1 discloses an annular valve according to the preamble of appended claim 1. Yet another annular valve is disclosed in document EP 2 770 202 A1.

(1) An annular valve according to the present invention includes: an annular valve seat including a seat portion formed by an outer circumferential edge and an inner circumferential edge of an annular opening; a rod configured to be movable along a direction orthogonal to the seat portion; an annular valve body disposed so as to face the annular valve seat and fixed to the rod; and a valve-body moving unit for moving the annular valve body between: a valve-closed position in which the annular valve body contacts the seat portion of the annular valve seat so that the annular opening is closed by the annular valve body; and a valve-open position in which the annular valve body is positioned away from the seat portion of the annular valve seat so that the annular opening is open.

The seat portion of the annular valve seat is configured to be in surface contact with the annular valve body in the valve-closed position in a first annular region including the outer circumferential edge of the annular opening and in a second annular region including the inner circumferential edge of the annular opening.

In the above annular valve (1), the seat portion of the annular valve seat is configured to be in surface contact with the annular valve body in the valve-closed position in the first annular region including the outer circumferential edge of the annular opening and the second annular region including the inner circumferential edge of the annular opening.

Thus, during an operation for opening or closing the annular valve, the motion of the annular valve body is stabilized by the damping effect achieved by the squeeze film in the surface-contact region between the seat portion and the annular valve body, which makes it possible to restrict unstable behaviors of the valve such as delay in the motion of the valve (e.g. delay in closing or opening of the valve) and unintended motion of the valve.

Further, during an operation for opening or closing the annular valve, shock on the annular valve body is reduced due to a decrease in the speed of the annular valve body by the squeeze effect (fluid resistant force), and erosion is restricted in the surface-contact region due to a decrease in the flow speed by formation of a slight planar gap between the seat portion and the annular valve body. As a result, it is possible to restrict damage to the annular valve.

The surface-contact region is a region of the seat portion including a surface of the first annular region and a surface of the annular valve body that is in surface contact with the first annular region, and a region of the seat portion including a surface of the second annular region and a surface of the annular valve body that is in surface contact with the second annular region.

(2) In some embodiments, in the above configuration (1), the annular valve body includes: a valve-body portion which is in surface contact with the first annular region and the second annular region of the seat portion in the valve-closed position; a fixed portion fixed to the rod; and a connection portion which connects the valve-body portion and the fixed portion, the connection portion having a spring constant of 9kN/mm or more in a direction along the rod.

Generally, during an operation for opening or closing the annular valve, cavitation may occur in the flow of the fluid, and this cavitation may cause unstable behaviors of the annular valve.

As a result of intensive research of the present inventors, it was found that one of the reasons for occurrence of cavitation is the unevenness in the flow of the fluid around the annular valve during an operation for opening or closing the valve. Specifically, when the flow of the fluid around the annular valve becomes uneven, the valve-body portion may incline from the seat portion due to a pressure differential of the fluid flowing through the annular opening. As a result, during an operation for opening or closing the valve, only a part of the valve-body portion in the circumferential direction may contact the seat portion, and the other portion may become out of contact. In this state, a gap is formed at the noncontact section between the valve-body portion and the seat portion. Thus, a jet stream may be created in this gap and cavitation may occur in the fluid.

In view of this, in the above configuration (2), the connection portion connecting the valve-body portion and the fixed portion is configured to have a spring constant of 9kN/mm or more in a direction along the rod. In this way, it is possible to improve the stiffness of the annular valve body and restrict the valve-body portion from inclining from the seat portion. Thus, during an operation for opening or closing the valve, it is possible to avoid an event such that the valve-body portion and the seat portion become partially out of contact to form a gap through which a jet stream flows to cause cavitation. As a result, it is possible to restrict unstable behaviors of the annular valve due to occurrence of cavitation.

(3) In one embodiment, in the above configuration (2), the connection portion includes a plurality of connection arms connecting the fixed portion and the valve-body portion, the connection arms being disposed at different positions in a circumferential direction, and each of the plurality of connection arms extends linearly.

With the above configuration (3), the plurality of connection arms for connecting the fixed portion and the valve-body portion is disposed at different positions in the circumferential direction, each extending in a linear fashion. Thus, it is possible to further enhance the stiffness of the annular valve body and to prevent occurrence of cavitation effectively.

(4) The annular valve body includes a first surface facing the annular valve seat and a second surface disposed opposite to the first surface, and the annular valve body further includes a valve-body shroud portion disposed opposite to the annular valve seat across the annular valve body in an axial direction of the annular opening, the valve-body shroud portion being configured to cover the second surface and an outer circumferential surface of the annular-valve body at least partially in the valve-open position.

With the above configuration (4), since the valve-body shroud portion is disposed so as to cover the second surface (which does not face the annular valve seat) and the outer circumferential surface of the annular valve body in the valve-open position at least partially, the annular valve body separated from the annular valve seat is restricted from being forced toward the annular valve seat by the flow of the fluid in the valve-open state (in which the annular valve body is in the valve-open position). As a result, it is possible to stabilize the motion of the annular valve body regardless of the pressure or flow rate of the fluid.

(5) In some embodiments, in the above configuration (4), the valve-body shroud portion includes: a base portion having an annular shape and being disposed so as to face the second surface of the annular valve body; and a rim portion protruding toward the annular valve seat from an outer circumferential edge of the base portion, and a relationship of d ≤ 0.05t is satisfied when the annular valve body is in the valve-open position, where d is a distance between a tip end surface of the rim portion and a surface of the annular valve body at an outer circumferential edge portion, along a center axis of the annular opening, and t is a thickness of the annular valve body at the outer circumferential edge portion.

In the above configuration (5), the second surface of the annular valve body is covered by the base portion, and the outer circumferential surface of the annular valve body is covered by the rim portion. Further, when the annular valve body is in the valve-open position, a relationship of d≤0.05t is satisfied, where d is a distance between the tip end surface of the rim portion and the surface of the outer circumferential edge portion of the annular valve body, and t is the thickness of the outer circumferential edge portion of the annular valve body. Specifically, when the annular valve body is in the valve-open position, a substantial part or the entire part of the outer circumferential surface of the annular valve body is covered by the rim portion. In this way, in the valve-open state, it is possible to protect the annular valve body from the flow of the fluid effectively, and to further stabilize the motion of the annular valve body.

(6) In one embodiment, in the above configuration (4) or (5), the valve-body shroud portion includes: a base portion having an annular shape and being disposed so as to face the second surface of the annular valve body; and a rim portion protruding toward the annular valve seat from an outer circumferential edge of the base portion. A gap is formed between an inner circumferential surface of the rim portion and an outer circumferential surface of the annular valve body when the annular valve body is in the valve-open position. The gap has a size of 0.005D or more, where D is an outer diameter of the annular valve body.

With the above configuration (6), a gap is formed between the inner circumferential surface of the rim portion and the outer circumferential surface of the annular valve body, and the gap has a size of 0.005D or more, where D is the outer diameter of the annular valve body. In this way, the fluid flows in and out smoothly between the annular valve body and the valve-body shroud portion via the gap, which makes it possible to reduce the influence of the back pressure of the annular valve body during an operation for opening or closing the valve and to improve the response speed of the annular valve body.

(7) In some embodiments, in any one of the above configurations (4) to (6), the valve-body shroud portion includes: a base portion having an annular shape and being disposed so as to face the second surface of the annular valve body; and a rim portion protruding toward the annular valve seat from an outer circumferential edge of the base portion, and a root portion of the rim portion is configured such that a thickness of the root portion increases toward the base portion.

With the above configuration (7), the thickness of the root portion of the rim portion increases toward the base portion, which makes it possible to secure the strength whereby the flow of the fluid is bearable at the rim portion.

(8) The valve-body shroud portion includes: a base portion having an annular shape and being disposed so as to face the second surface of the annular valve body; and a rim portion protruding toward the annular valve seat from an outer circumferential edge of the base portion, and a distance in a radial direction between an inner circumferential edge of a tip end surface of the rim portion and the outer circumferential surface of the annular valve body increases toward the second surface from the first surface of the annular valve body.

With the above configuration (8), a distance in the radial direction between the inner circumferential edge of the tip end surface of the rim portion and the outer circumferential surface of the annular valve body increases, from the first surface toward the second surface of the annular valve body. Specifically, the gap between the inner circumferential surface of the rim portion and the outer circumferential surface of the annular valve body becomes larger with an increase in the amount of lift of the annular valve body from the valve-body shroud portion in a range of motion in the axial direction in which at least a part of the annular valve body is covered by the rim portion during an operation for opening or closing the valve. In this way, the fluid smoothly flows in and out between the annular valve body and the valve-body shroud portion while the valve operation is in a transient state, which makes it possible to further improve the response speed of the annular valve body.

(9) In some embodiments, in any one of the above configurations (4) to (8), the valve-body shroud portion includes: a base portion having an annular shape and being disposed so as to face the second surface of the annular valve body; and a rim portion protruding toward the annular valve seat from an outer circumferential edge of the base portion. A ridge protruding toward the annular valve seat is disposed on an inner circumferential edge of the base portion. The second surface of the annular valve body contacts the ridge in the valve-open position and a gap is formed between the base portion and the second surface.

With the above configuration (9), the ridge protruding toward the annular valve seat is disposed on the inner circumferential edge of the base portion of the valve-body shroud portion. Due to the interposition of the ridge, a gap is formed between the base portion and the second surface of the annular valve body in the valve-open position. In this way, the fluid smoothly flows in and out between the annular valve body and the valve-body shroud portion while the valve operation is in a transient state, which makes it possible to further improve the response speed of the annular valve body.

(10) In some embodiments, in any one of the above configurations (1) to (9), the annular valve body includes: a first surface facing the annular valve seat, the first surface being flat and parallel to a radial direction of the annular opening; and a second surface disposed opposite to the first surface, the second surface including an inclined region which inclines with respect to the radial direction. The second surface is inclined with respect to the radial direction in the inclined region so that a thickness of the annular valve body increases inwardly in the radial direction.

With the above configuration (10), since the first surface of the annular valve body is formed flat and parallel to the radial direction of the annular opening, it is possible to cause the first surface of the annular valve body to be in surface contact with the first annular region and the second annular region of the seat portion easily. Further, the second surface of the annular valve body includes the inclined region that is inclined in the radial direction, and the thickness of the annular valve body increases inwardly in the radial direction at the inclined region. In this way, it is possible to improve the stiffness of the annular valve body and restrict inclination of the valve-body portion from the seat portion. Thus, during an operation for opening or closing the valve, it is possible to avoid an event such that the valve-body portion and the seat portion become partially out of contact to form a gap through which a jet stream flows to cause cavitation. As a result, it is possible to restrict unstable behaviors of the annular valve due to occurrence of cavitation.

(11) In some embodiments, in any one of the above configurations (1) to (10), the annular valve further includes a valve casing including the annular valve seat. The valve casing includes: an annular groove forming the annular opening and extending from the annular opening along a center axis of the annular opening toward a side opposite from the annular valve body; and a plurality of radial flow channels extending along a radial direction of the annular opening so as to communicate with the annular groove.

With the above configuration (11), the valve casing includes the annular groove that forms the annular opening and extends along the center axis, and the plurality of radial flow channels that extends along the radial direction of the annular opening so as to communicate with the annular groove. Thus, it is possible to secure a space for placing the valve-body moving unit (e.g. electric magnet) securely around the end portion of the rod on a side opposite to where the annular valve body is fixed.

(12) In one embodiment, in the above configuration (11), the annular groove has a diffuser shape such that a cross-sectional area of a flow path increases with distance from the annular opening.

With the above configuration (12), since the annular groove has a cross-sectional area of the flow path that increases with distance from the annular opening, smooth discharge or introduction of the fluid in the annular valve is enabled.

(13) In one embodiment, in the above configuration (11) or (12), the valve casing further includes an annular flow channel disposed radially outside the plurality of radial flow channels, the annular flow channel communicating with the plurality of radial flow channels. An area of a cross section of the annular flow channel, the cross section being orthogonal to the center axis, is not less than an opening area of the annular opening.

With the above configuration (13), since the valve casing includes the annular flow channel communicating with the plurality of radial flow channels, and the area of the cross section of the annular flow channel orthogonal to the center axis is equal to or more than the area of the opening of the annular opening, smooth discharge or introduction of the fluid in the annular valve is enabled.

(14) In one embodiment, in any one of the above configurations (11) to (13), the valve casing further includes an annular flow channel disposed radially outside the plurality of radial flow channels, the annular flow channel communicating with the plurality of radial flow channels, and a cross-sectional area of a path of each of the plurality of radial flow channels is not less than 1/4 times an area of a cross section of the annular flow channel, the cross section being orthogonal to the center axis.

With the above configuration (14), since the valve casing includes the annular flow channel communicating with the plurality of radial flow channels, and the area of cross section of the flow path of each of the plurality of radial flow channels is 1/4 or more of the area of the cross section of the annular flow channel orthogonal to the center axis, smooth discharge or introduction of the fluid in the annular valve is enabled.

(15) A power generating apparatus of renewable-energy type according to the invention includes: a rotor configured to rotate by receiving renewable energy; a hydraulic pump configured to be driven by the rotor to increase a pressure of working fluid; a hydraulic motor configured to be driven by the working fluid; and a generator configured to be driven by the hydraulic motor. At least one of the hydraulic pump or the hydraulic motor includes: a working chamber formed by a cylinder and a piston which is reciprocable in the cylinder; an inner flow channel configured to be capable of bringing the working chamber into communication with an outer flow channel disposed between the hydraulic pump and the hydraulic motor; and the annular valve according to any one of the above configurations (1) to (14) disposed in the inner flow channel and configured to be capable of switching a communication state between the working chamber and the outer flow channel.

In the above power generating apparatus of renewable-energy type (15), at least one of the hydraulic pump or the hydraulic motor is the annular valve according to the above (1) to (14). As described above, since the annular valve enables restriction of unstable behaviors of the valve and damage to the valve, a trouble of the annular valve is less likely to occur in at least one of the hydraulic pump or the hydraulic motor, which enables stable operation of the power generating apparatus of renewable-energy type.

According to at least some embodiments of the present invention, it is possible to restrict unstable behaviors of the annular valve such as delay in the motion (e.g. delay in opening or closing) of the annular valve and unintended motion, and to restrict damage to the annular valve.

### BRIEF DESCRIPTION OF THE DRAWINGS

FIG. 1 is an overall configuration diagram of a wind turbine generator according to one embodiment.
FIG. 2 is a cross-sectional view of a schematic configuration of a hydraulic machine according to one embodiment.
FIG. 3 is a cross-sectional view of a low-pressure valve and a high-pressure valve with the peripheral structure thereof according to one embodiment.
FIG. 4 is a cross-sectional view of a low-pressure valve and the peripheral structure thereof according to one embodiment.
FIG. 5A is a diagram of an annular valve body and a seat portion in a valve-closed position. FIG. 5B is a diagram of an annular valve body and a seat portion in a valve-open position.
FIG. 6A is a perspective view of an annular valve according to one embodiment. FIG. 6B is a cross-sectional view of the annular valve body illustrated in FIG. 6A, taken along line A-A.
FIG. 7A is a perspective view of an annular valve body according to another embodiment. FIG. 7B is a cross-sectional view of the annular valve body illustrated in FIG. 7A, taken along line A-A.
FIG. 8 is a partial cross-sectional view of an annular valve body and a seat portion according to one embodiment (an enlarged view of section C of FIG. 5B).
FIG. 9 is a view of a valve casing of an annular valve according to one embodiment, as seen from the side of an annular opening.
FIG. 10 is a cross-sectional view of the valve casing of the annular valve according to one embodiment, taken along line D-D from FIG. 9.
FIG. 11 is a cross-sectional view of the valve casing of the annular valve according to one embodiment, taken along line E-E from FIG. 9.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

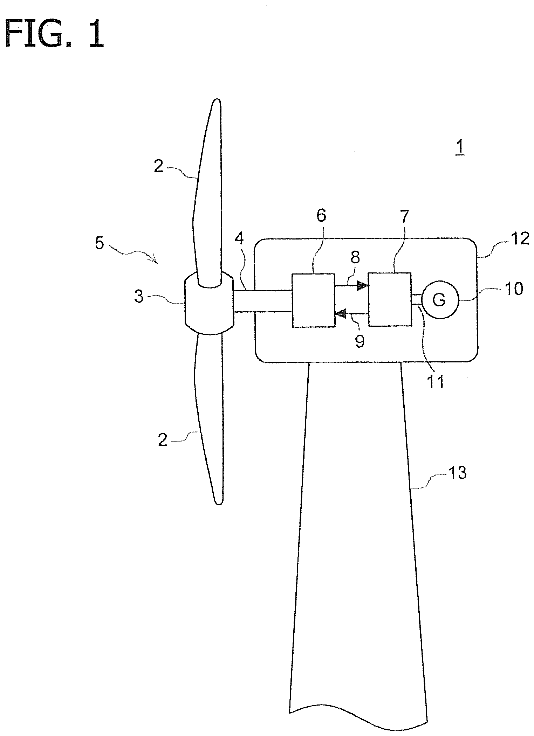

FIG. 1 is an overall configuration diagram of a wind turbine generator according to one embodiment.

In the following description, a wind turbine generator 1 which is a power generating apparatus of renewable-energy type is described as an example of an object to which an annular valve according to the present embodiment is applied. However, application of the annular valve according to the present embodiment is not limited to this, and may be a power generating apparatus of renewable-energy type of another kind, or an apparatus other than a power generating apparatus of renewable-energy type such as an industrial vehicle, an industrial machine, a ship device, and the like.

As illustrated in FIG. 1, the wind turbine generator 1 according to one embodiment includes a rotor 5 including at least one blade 2, a hub 3 to which the at least one blade 2 is mounted, and a rotation shaft 4 configured to be rotatable integrally with the hub 3. The rotor 5 is supported rotatably to a nacelle 12 via a main bearing, and configured to rotate as the at least one blade 2 receives wind. The nacelle 12 is mounted to an upper end portion of a tower 13 disposed on ocean or on land.

A hydraulic pump 6 is connected to the rotor 5 via the rotation shaft 4. A hydraulic motor 7 is connected to the hydraulic pump 6 via a high-pressure oil line 8 and a low-pressure oil line 9. Specifically, an outlet of the hydraulic pump 6 is connected to an inlet of the hydraulic motor 7 via the high-pressure oil line 8, and an inlet of the hydraulic pump 6 is connected to an outlet of the hydraulic motor 7 via the low-pressure oil line 9. The hydraulic pump 6 is configured to be driven by the rotor 5 to increase the pressure of working oil, thereby producing high-pressure working oil (pressurized oil). The pressurized oil produced by the hydraulic pump 6 is supplied to the hydraulic motor 7 via the high-pressure oil line 8. The hydraulic motor 7 is configured to be driven by the pressurized oil whose pressure is increased by the hydraulic pump 6. The low-pressure working oil having performed work in the hydraulic motor 7 is returned again to the hydraulic pump 6 via the low-pressure oil line 9 disposed between the outlet of the hydraulic motor 7 and the inlet of the hydraulic pump 6. A generator 10 is connected to the hydraulic motor 7 via an output shaft 11. The generator 10 is configured to be driven by the hydraulic motor 7 and to generate electric power.

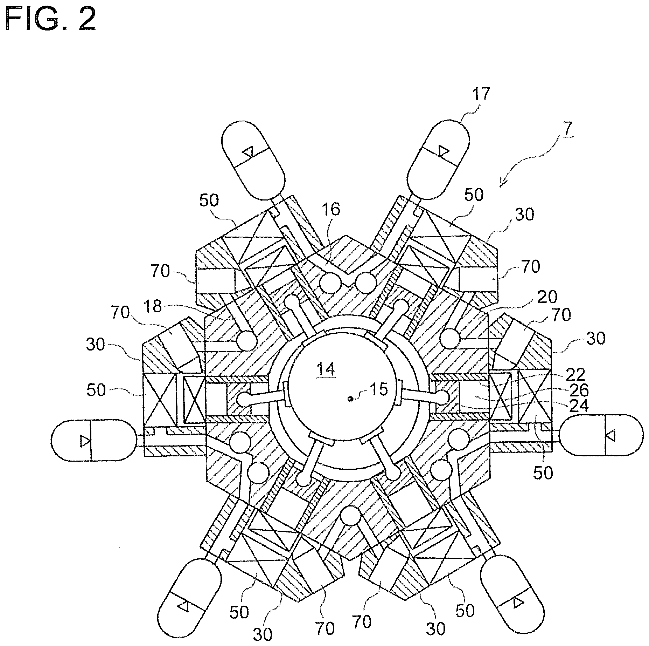

FIG. 2 is a cross-sectional view of schematic configuration of a hydraulic machine 7 according to one embodiment.

While a hydraulic motor is illustrated in FIG. 2 as the hydraulic machine 7, a hydraulic machine to which the present embodiment is to be applied is not limited to this, and may be a hydraulic pump.

In some embodiments, the hydraulic machine 7 includes a working chamber 26 formed by a cylinder 22 and a piston 24, inner flow channels 16, 18 configured to be capable of bringing the working chamber 26 and an outer flow channel (e.g. the high-pressure oil line 8 or the low-pressure oil line 9 in FIG. 1) disposed between the hydraulic pump 6 and the hydraulic motor 7 into communication, and an annular valve (e.g. a low-pressure valve 50 or a high-pressure valve 70) disposed in the inner flow channels 16, 18 and configured to be capable of switching the communication state between the working chamber 26 and the outer flow channel.

The rotation shaft 14 is coupled to the output shaft 11 (see FIG. 1) in a case of the hydraulic motor 7, and to the rotation shaft 4 (see FIG. 1) in the case of the hydraulic pump 6.

A cylinder block 20 extends in annular shape over the entire periphery of the rotation shaft 14, and includes a plurality of cylinders 22 extending in a radial direction from a rotational axis 15 of the rotation shaft 14 at the center, a plurality of pistons 24 disposed so as to be reciprocable in the respective cylinders 22, and working chambers 26 formed by the cylinders 22 and the pistons 24.

A plurality of valve blocks 30 is disposed outside the cylinder block 20 in the radial direction, corresponding to the positions of the cylinders 22. Each valve block 30 includes the low-pressure valve 50 and the high-pressure valve 70.

In the cylinder block 20 and the valve blocks 30, high-pressure oil inner flow channels 18 connected to the high-pressure oil line 8 (see FIG. 1) and low-pressure oil inner flow channels 16 connected to the low-pressure oil line 9 are formed. Each of the high-pressure oil inner flow channels 18 and the low-pressure oil inner flow channels 16 is connected to corresponding one of the working chambers 26. The communication state between each high-pressure oil inner flow channel 18 and the working chamber 26 is switched by opening and closing the high-pressure valve 70 disposed in the high-pressure oil inner flow channel 18. The communication state between each low-pressure oil inner flow channel 16 and the working chamber 26 is switched by opening and closing the low-pressure valve 50 disposed in the low-pressure oil inner flow channel 16.

In the hydraulic machine 7, as a result of the switching between the low-pressure valve 50 and the high-pressure valve 70, working oil flows into and out from the working chamber 26, so that the pressure energy of the working oil in the working chamber 26 is converted into the reciprocating-motion energy of the piston 24 or vice versa, and the reciprocating-motion energy of the piston 24 is converted into the rotational energy of the rotation shaft 14 or vice versa. For instance, in the hydraulic pump 6, the low-pressure valve 50 and the high-pressure valve 70 are switched suitably so as to produce high-pressure working oil using the rotational energy of the rotation shaft 4 (see FIG. 1). In the hydraulic motor 7, the low-pressure valve 50 and the high-pressure valve 70 are switched suitably so as to rotate the output shaft 11 (see FIG. 1) using the pressure energy of the high-pressure working oil.

In the present embodiment, at least one of the low-pressure valve 50 or the high-pressure valve 70 has the following configuration of an annular valve.

Now, as an example of a hydraulic machine, the hydraulic motor 7 will be described specifically.

In one embodiment, the hydraulic motor 7 includes the rotation shaft 14 coupled to the output shaft 11 (see FIG. 1), the cylinder block 20 disposed radially outside the rotation shaft 14, and the valve blocks 30 disposed radially outside the cylinder block 20.

The hydraulic motor 7 includes a cam shaft 14 which has eccentric cams arranged in a plurality of rows in a direction along the rotational axis 15, the cam shaft 14 serving as the rotation shaft 14.

The cylinder block 20 extends in an annular shape over the entire circumference of the cam shaft 14. The cylinder block 20 may be constituted of a plurality of sections arranged in the circumferential direction and connected to one another. Further, the cylinder block 20 includes the plurality of cylinders 22 extending in a radial direction from the rotational axis 15 of the rotation shaft 14 at the center, the plurality of pistons 24 disposed so as to be reciprocable in the respective cylinders 22, and the working chambers 26 formed by the cylinders 22 and the pistons 24. In the illustrated example, six cylinders 22 and six pistons 24 are arranged in the circumferential direction.

A plurality of valve blocks 30 is disposed outside the cylinder block 20 in the radial direction, corresponding to the positions of the cylinders 22. In the illustrated example, six valve blocks 30 are arranged in the circumferential direction. The valve blocks 30 are fixed to the cylinder block 20 by bolts or the like.

In each of the cylinder block 20 and the valve blocks 30, a high-pressure oil inner flow channel 18 connected to the high-pressure oil line 8 (see FIG. 1) and a low-pressure oil inner flow channel 16 connected to the low-pressure oil line 9 (see FIG. 1) are formed. Specifically, the high-pressure oil inner flow channel 18a formed inside the cylinder block 20 and the high-pressure oil inner flow channel 18b formed inside the valve block 30 are connected via the high pressure port 18c of the cylinder block 20. Further, the low-pressure oil inner flow channel 16a formed inside the cylinder block 20 and the low-pressure oil inner flow channel 16b formed inside the valve block 30 are connected via the low pressure port 16c of the cylinder block 20.

A low-pressure oil accumulator 17 which is to be connected to the low-pressure oil inner flow channel 16b may be attached to the valve blocks 30 for the purpose of restricting pulsation of the low-pressure oil, for instance.

In the hydraulic motor 7 having the above configuration, when high-pressure working oil is supplied to the working chamber 26 via the high-pressure oil inner flow channel 18 while the high-pressure valve 70 is open and the low-pressure valve 50 is closed, the piston 24 reciprocates in the cylinder 22 due to the pressure energy of the working oil, and the rotation shaft 14 rotates in accordance with the reciprocating motion of the piston 24. Then, the working oil having a reduced pressure is discharged from the working chamber 26 into the low-pressure oil inner flow channel 16 by closing the high-pressure valve 70 and opening the low-pressure valve 50.

In the present embodiment, at least one of the low-pressure valve 50 or the high-pressure valve 70 is constituted by the annular valve described below.

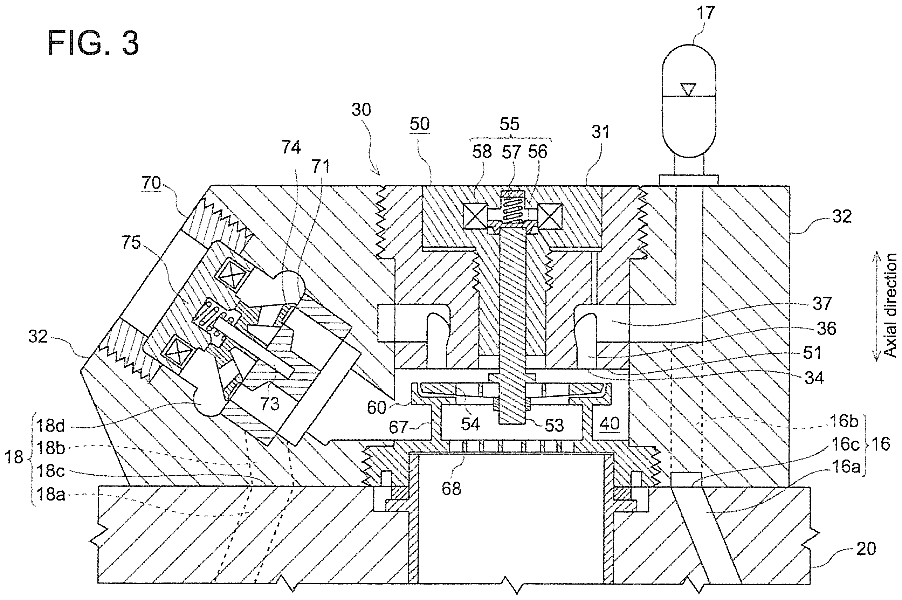

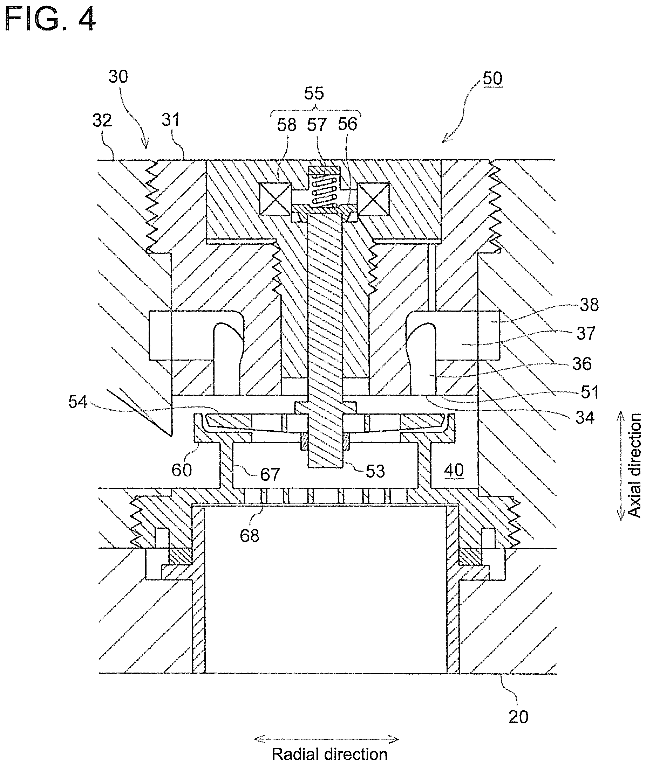

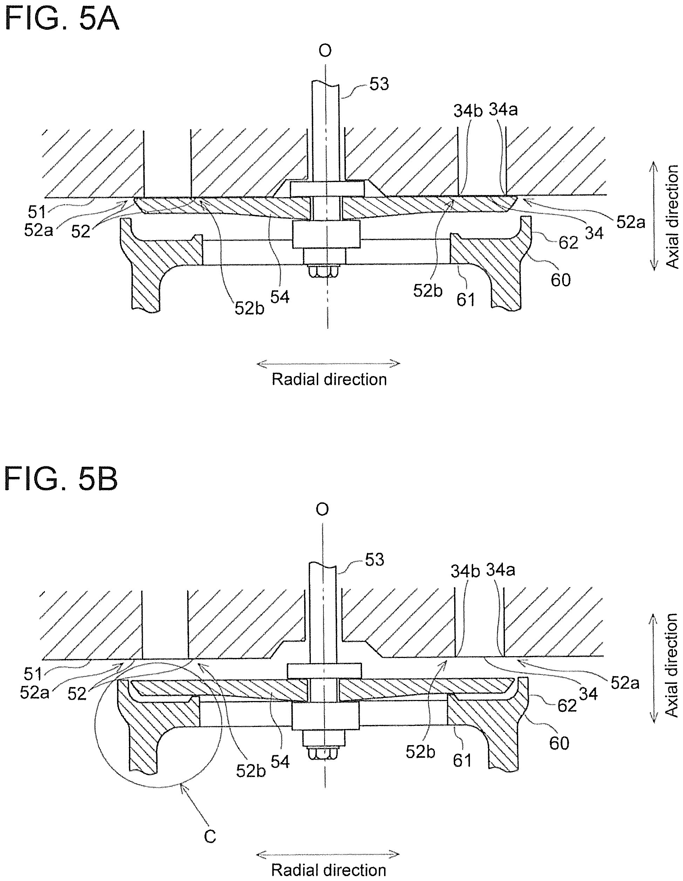

Next, with reference to FIGs. 3, 4, 5A and 5B, the above low-pressure valve 50 or the high-pressure valve 70 and the peripheral structure thereof will be described specifically. FIG. 3 is a cross-sectional view of the low-pressure valve 50 and the high-pressure valve 70 with the peripheral structure thereof according to one embodiment. FIG. 4 is a cross-sectional view of the low-pressure valve 50 and the peripheral structure thereof according to one embodiment. FIG. 5A is a diagram of the annular valve body 54 and the seat portion 52 in a valve-closed position. FIG. 5B is a diagram of the annular valve body 54 and the seat portion 52 in a valve-open position.

In the illustrated examples, the annular valve according to the present embodiment is applied to the low-pressure valve 50. However, application of the annular valve is not limited to this, and the annular valve may be applied to the high-pressure valve 70.

In one embodiment, the annular valve (low-pressure valve) 50 includes an annular valve seat 51 having a seat portion 52, a rod 53 configured to be movable along a direction orthogonal to the seat portion 52, an annular valve body 54 fixed to the rod 53, and a valve-body moving unit 55 for moving the annular valve body 54 along a direction orthogonal to the seat portion 52. In the illustrated examples, the direction orthogonal to the seat portion 52 is substantially equal to the direction along the center axis O of the annular opening 34.

The annular valve body 54 is disposed so as to face the annular valve seat 51 and fixed to the rod 53.

The valve-body moving unit 55 is configured to move the annular valve body 54 along the direction orthogonal to the seat portion 52 between a valve-closed position in which the annular valve body 54 contacts the seat portion 52 of the annular valve seat 51 so that the annular opening 34 is closed by the annular valve body 54, and a valve-open position in which the annular valve body 54 is away from the seat portion 52 so that the annular opening 34 is open. Only a portion of the annular valve body 54 that contacts the seat portion 52 may protrude toward the annular valve seat 51 from other part of the annular valve body 54.

The annular opening 34 is formed on an end of the low-pressure oil inner flow channel 16 that is facing the working chamber 26.

The seat portion 52 is formed by the outer circumferential edge 34a and the inner circumferential edge 34b of the annular opening 34. The seat portion 52 of the annular valve seat 51 is configured to be in surface contact with the annular valve body 54 in the valve-closed position in the first annular region 52a including the outer circumferential edge 34a of the annular opening 34 and the second annular region 52b including the inner circumferential edge 34b of the annular opening 34.

As for a specific configuration example, the annular valve 50 is disposed inside the valve block 30. The valve block 30 includes a valve-block body portion 31 on which the annular valve seat 51 is disposed and a valve-block connection portion 32 disposed so as to surround the valve-block body portion 31. The valve-block connection portion 32 is fixed to the cylinder block 20, and the valve-block body portion 31 is fixed to the valve-block connection portion 32. An intermediate chamber 40 configured to communicate with the working chamber 26 is disposed between the valve-block body portion 31 and the cylinder block 20. The intermediate chamber 40 is configured to be capable of communicating with the low-pressure oil inner flow channel 16 and the high-pressure oil inner flow channel 18. Specifically, the low-pressure oil inner flow channel 16 communicates with the intermediate chamber 40 when the annular valve (low-pressure valve) 50 is open, and the high-pressure oil inner flow channel 18 communicates with the intermediate chamber 40 when the high-pressure valve 70 is open.

The annular valve seat 51 is disposed on a surface of the valve block body portion 31 that is adjacent to the cylinder 22. The seat portion 52 of the annular valve seat 51 includes the first annular region 52a including the outer circumferential edge 34a of the annular opening 34 and the second annular region 52b including the inner circumferential edge 34b of the annular opening 34.

The rod 53 is disposed in a rod hole 33 formed in the valve block body portion 31. An end (hereinafter, referred to as the first end) of the rod 53 protrudes out from the rod hole 33. Further, the rod 53 is configured to be movable along a direction orthogonal to the seat portion (seat surface) 52. As illustrated in the drawing, the annular valve body 54 and the rod 53 may have a relative positional relationship such that the rod 53 is disposed on the center axis O of the annular opening 34 formed on the annular valve body 54, and the rod 53 moves along the center axis O. In this case, the distance between the seat portion 52 and the rod 53 of the annular valve seat 51 is substantially constant in the circumferential direction, which makes it possible to make the stiffness of the annular valve seat 51 substantially constant in the circumferential direction. However, the relative positional relationship between the rod 53 and the annular valve body 54 is not limited to this, and the rod 53 may be disposed offset from the center axis O of the annular opening 34.

The annular valve body 54 is disposed so as to face the annular valve seat 51 and fixed to the first end of the rod 53, so as to be capable of moving integrally with the rod 53. In the illustrated example, the annular valve body 54 is disposed in the intermediate chamber 40.

As illustrated in FIG. 4, the valve-body moving unit 55 is configured to move the rod 53 and the annular valve body 54 between the valve-open position and the valve-closed position. For instance, in a case where the annular valve 50 is a solenoid valve, the valve-body moving unit 55 includes an armature 56 coupled to the second end, which is opposite to the first end, of the rod 53, a biasing member 57 for biasing the armature 56 in a biasing direction, and an electric magnet 58 configured to attract the armature 56 and drive the armature 56 in a direction opposite from the biasing direction when supplied with electric power. The valve-body moving unit 55 may be disposed so as to be removable and detachable with respect to the valve block body portion 31.

As illustrated in FIG. 5A, when the annular valve body 54 is in the valve-closed position, the annular valve body 54 is in surface contact with the first annular region 52a and the second annular region 52b of the seat portion 52.

As illustrated in FIG. 5B, when the annular valve body 54 is in the valve-open position, the annular valve body 54 is positioned at a distance from the seat portion 52 so as to be inside a valve-body shroud portion 60 described below.

With the above configuration, the seat portion 52 of the annular valve seat 51 is configured to be in surface contact with the annular valve body 54 in the valve-closed position in the first annular region 52a including the outer circumferential edge 34a of the annular opening 34 and the second annular region 52b including the inner circumferential edge 34b of the annular opening 34.

Thus, during an operation for opening or closing the annular valve 50, the motion of the annular valve body 54 is stabilized by the damping effect achieved by the squeeze film in the surface-contact region between the seat portion 52 and the annular valve body 54, which makes it possible to restrict unstable behaviors of the valve such as delay in the motion of the valve (e.g. delay in closing or opening of the valve) and unintended motion of the valve.

Further, during an operation for opening or closing the annular valve 50, shock on the annular valve body 54 is reduced due to a decrease in the speed of the annular valve body 54 by the squeeze effect (fluid resistant force), and erosion is restricted in the surface-contact region due to a decrease in the flow speed by formation of a slight planar gap between the seat portion and the annular valve body 54. As a result, it is possible to restrict damage to the annular valve 50.

The surface-contact region is a region of the seat portion 52 including a surface of the first annular region 52a and a surface of the annular valve body 54 that is in surface contact with the first annular region 52a, and a region of the seat portion 52 including a surface of the second annular region 52b and a surface of the annular valve body 54 that is in surface contact with the second annular region 52b.

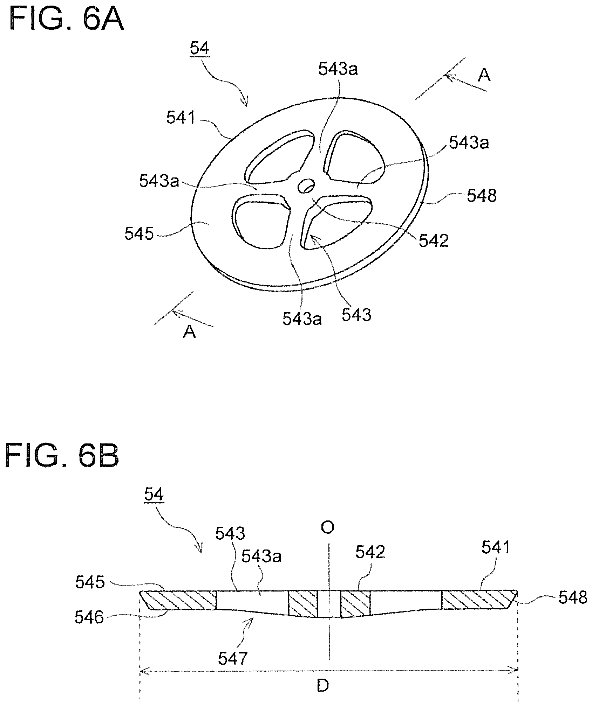

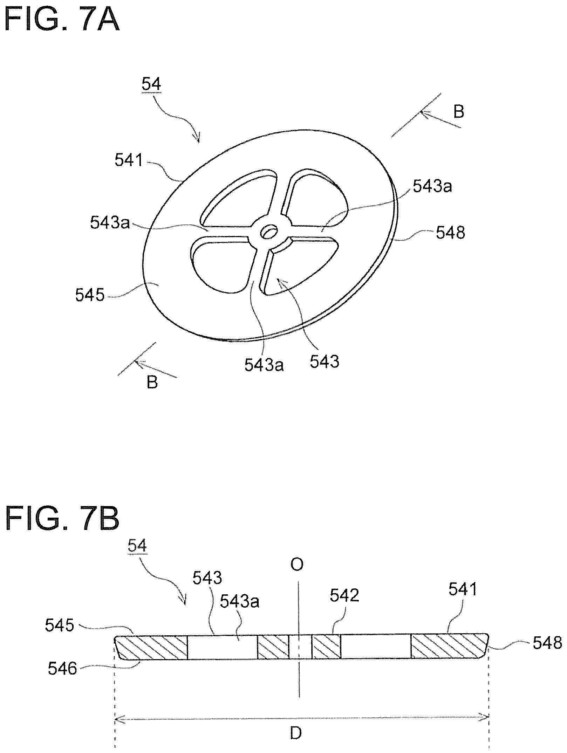

FIG. 6A is a perspective view of the annular valve body 54 according to one embodiment, and FIG. 6B is a side view (cross-sectional view taken along line A-A of FIG. 6A) of the annular valve body 54 illustrated in FIG. 6A. FIG. 7A is a perspective view of the annular valve body 54 according to another embodiment, and FIG. 7B is a side view (cross-sectional view taken along line B-B of FIG. 7A) of the annular valve body 54 illustrated in FIG. 7A.

As illustrated in FIGs. 6A and 6B, and FIGs. 7A and 7B, in some embodiments, the annular valve body 54 includes a valve-body portion 541 that is in surface contact with the first annular region 52a and the second annular region 52b of the seat portion 52 in the valve-closed position, a fixed portion 542 that is fixed to the first end of the rod 53, and a connection portion 543 that couples the valve-body portion 541 and the fixed portion 542.

The connection portion 543 has a spring constant of 9kN/mm or more in a direction along the rod 53. The direction along the rod 53 is substantially equal to a direction along the center axis O of the annular opening 34.

Generally, during an operation for opening or closing the annular valve 50, cavitation may occur in the flow of the fluid, and this cavitation may cause unstable behaviors of the annular valve 50.

As a result of intensive research of the present inventors, it was found that one of the reasons for occurrence of cavitation is the unevenness in the flow of the fluid around the annular valve during an operation for opening or closing the valve. Specifically, when the flow of the fluid around the annular valve becomes uneven, the valve-body portion 541 may incline from the seat portion 52 due to a differential pressure of the fluid flowing through the annular opening 34. As a result, during an operation for opening or closing the valve, only a part of the valve-body portion 541 in the circumferential direction may contact the seat portion, and the other portion may be out of contact. In this state, a gap is formed at the noncontact section between the valve-body portion 541 and the seat portion 52. Thus, a jet stream may be created in this gap and cavitation may occur in the fluid.

In view of this, the connection portion 543 connecting the valve-body portion 541 and the fixed portion 542 is configured to have a spring constant of 9kN/mm or more in a direction along the rod 53. In this way, it is possible to improve the stiffness of the annular valve body 54 and restrict the valve-body portion 541 from inclining from the seat portion 52. Thus, during an operation for opening or closing the valve, it is possible to avoid an event such that the valve-body portion 541 and the seat portion 52 become partially out of contact and form a gap through which a jet stream flows to cause cavitation. As a result, it is possible to restrict unstable behaviors of the annular valve 50 due to occurrence of cavitation.

In one embodiment, the connection portion 543 includes a plurality of connection arms 543a that is disposed at different positions in the circumferential direction and that couples the rod 53 and the valve-body portion 541. In the example illustrated in FIGs. 6A and 6B, four connection arms 543a are disposed at regular intervals (intervals of 90 degrees) in a radial fashion from the fixed portion 542 at the center.

Each connection arm 543a extends linearly so as to bridge over the valve-body portion 541 and the fixed portion 542.

With the above configuration, the plurality of connection arms for connecting the rod and the valve-body portion is disposed at different positions in the circumferential direction, each extending in a linear fashion. Thus, it is possible to further enhance the stiffness of the annular valve body 54 and to prevent occurrence of cavitation effectively.

As illustrated in FIGs. 6A and 6B, in one embodiment, the annular valve body 54 faces the annular valve seat 51 (see FIG. 5A or FIG. 5B) and includes the first surface 545 which is flat and parallel to a radial direction of the annular opening 34 and the second surface 546 disposed opposite to the first surface, the second surface 546 including an inclined region 547 that inclines from the radial direction. The second surface is inclined in the radial direction so that the thickness of the annular valve body 54 increases inwardly in the radial direction at the inclined region 547.

With the above configuration, since the first surface 545 of the annular valve body 54 is formed flat and parallel to the radial direction of the annular opening 34, it is possible to cause the first surface 545 of the annular valve body 54 to be in surface contact with the first annular region 52a and the second annular region 52b of the seat portion 52 easily. Further, the second surface 546 of the annular valve body 54 includes the inclined region 547 that is inclined in the radial direction, and the thickness of the annular valve body 54 increases inwardly in the radial direction at the inclined region 547. In this way, it is possible to improve the stiffness of the annular valve body 54 and restrict the valve-body portion 541 from inclining from the seat portion 52. Thus, during an operation for opening or closing the valve, it is possible to avoid an event such that the valve-body portion 541 and the seat portion 52 become partially out of contact and form a gap through which a jet stream flows to cause cavitation. As a result, it is possible to restrict unstable behaviors of the annular valve 50 due to occurrence of cavitation.

As illustrated in FIGs. 7A and 7B, in another embodiment, the annular valve body 54 faces the annular valve seat 51 (see FIG. 5A or FIG. 5B) and includes the first surface 545 which is flat and parallel to a radial direction of the annular opening 34 and the second surface 546 disposed opposite to the first surface, the second surface 546 being flat and parallel to the radial direction of the annular opening. That is, the first surface 545 and the second surface 546 are formed substantially parallel to each other.

With this configuration, it is possible to manufacture the annular valve body 54 easily, and thus to reduce the cost of the annular valve 50.

As illustrated in FIGs. 3, 4, 5A and 5B, in one embodiment, the annular valve 50 further includes a valve-body shroud portion 60 that is disposed so as to be positioned opposite to the annular valve seat 51 across the annular valve body 54 in a direction along the center axis O of the annular opening 34 (hereinafter, referred to as the axial direction).

Among the surfaces of the annular valve body 54, the surface facing the annular valve seat 51 is referred to as the first surface 545, and the surface opposite to the first surface 545 is referred to as the second surface 546. In this case, the valve-body shroud portion 60 is configured to cover the second surface 546 and the outer circumferential surface 548 of the annular valve body 54 in the valve-open position at least partially.

Specifically, the valve-body shroud portion 60 includes an annular base portion 61 disposed so as to face the second surface of the annular valve body 54, and a rim portion 62 protruding from the outer circumferential edge of the base portion 61 toward the annular valve seat 51. Specifically, the second surface 546 of the annular valve body 54 is covered by the base portion 61, and the outer circumferential surface 548 of the annular valve body 54 is covered by the rim portion 62. The base portion 61 and the rim portion 62 may be formed integrally.

With the above configuration, since the valve-body shroud portion 60 is disposed so as to cover the second surface 546 and the outer circumferential surface 548 of the annular valve body 54 in the valve-open position at least partially, the annular valve body 54 separated from the annular valve seat 51 is restricted from being forced toward the annular valve seat by the flow of the fluid in the valve-open position. As a result, it is possible to stabilize the motion of the annular valve body 54 regardless of the pressure or flow rate of the fluid.

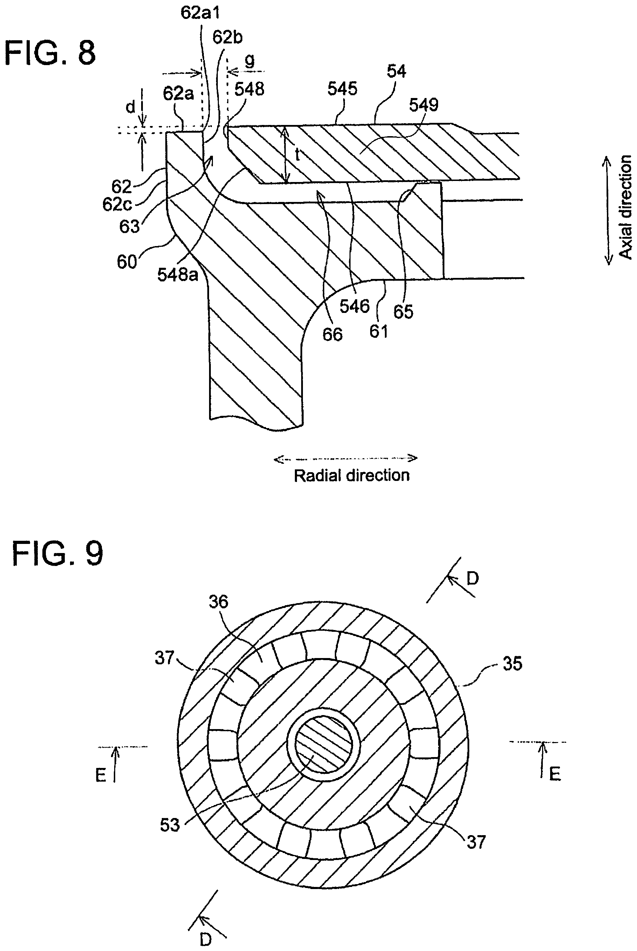

FIG. 8 is an enlarged view of section C of FIG. 5B.

As illustrated in the drawing, when the annular valve body 54 is in the valve-open position, a relationship of d≤0.05t may be satisfied, where d is a distance in the axial direction between the tip end surface 62a of the rim portion 62 and the surface of the outer circumferential edge portion 549 of the annular valve body 54, which is a distance along the center axis O illustrated in FIG. 5A, and t is the thickness of the outer circumferential edge portion 549 of the annular valve body 54. In the illustrated example, a tapered surface 548a is formed on the outer circumferential surface 548 of the annular valve body 54 as described below, in case of which the thickness of the outer circumferential edge portion 549 may be the thickness of the annular valve body 54 including the tapered surface 548a.

With the above configuration, when the annular valve body 54 is in the valve-open position, a substantial part or the entire part of the outer circumferential surface 548 of the annular valve body 54 is covered by the rim portion 62. In this way, in the valve-open state, it is possible to protect the annular valve body 54 from the flow of the fluid effectively, and to further stabilize the motion of the annular valve body 54.

Further, when the annular valve body 54 is in the valve-open position, a gap 63 is formed between the inner circumferential surface 62b of the rim portion 62 and the outer circumferential surface 548 of the annular valve body 54, and the width d of the gap 63 may have a size of 0.005D or more, where D is the outer diameter of the annular valve body 54. Here, the outer diameter D is the diameter of the annular valve body 54, as illustrated in FIG. 6B or 7B. Further, the width d of the gap represents the distance between the outer circumferential surface 548 of the annular valve body 54 and the inner circumferential surface 62b of the rim portion 62 in the radial direction.

With the above configuration, the gap 63 is formed between the inner circumferential surface 62b of the rim portion 62 and the outer circumferential surface 548 of the annular valve body 54, and the gap 63 has a size of 0.005D or more, where D is the outer diameter of the annular valve body 54. In this way, the fluid flows in and out smoothly via the gap 63 between the annular valve body 54 and the valve-body shroud portion 60, which makes it possible to reduce the influence of the back pressure of the annular valve body 54 during an operation for opening or closing the valve and to improve the response speed of the annular valve body 54.

Further, the root portion 62c of the rim portion 62 may be configured such that the thickness of the root portion 62c increases toward the base portion 61.

In the illustrated example, at the root portion 62c of the rim portion 62, the inner circumferential surface 62b has a shape curved into an R shape so as to have a curvature center at a side closer to the annular valve body 54. In another configuration example that is not illustrated, at the root portion 62c of the rim portion 62, the inner circumferential surface 62b may include a tapered surface that is inclined toward the annular valve body 54 toward the base portion 61.

In this way, the thickness of the root portion 62c of the rim portion 62 increases toward the base portion 61, which makes it possible to secure the strength whereby the flow of the fluid is bearable at the rim portion 62.

Further, a distance g in the radial direction between the inner circumferential edge 62a1 of the tip end surface 62a of the rim portion 62 and the outer circumferential surface 548 of the annular valve body 54 may increase, from the first surface 545 toward the second surface 546 of the annular valve body 54. Specifically, the gap between the inner circumferential surface of the rim portion 62 and the outer circumferential surface 548 of the annular valve body 54 may become larger with an increase in the amount of lift of the annular valve body 54 from the valve-body shroud portion 60 in a range of motion in the axial direction in which at least a part of the annular valve body 54 is covered by the rim portion 62 during an operation for opening or closing the valve.

In the illustrated example, a tapered surface 548a that is inclined inwardly in the radial direction from the first surface 545 toward the second surface 546 is disposed on at least a part of the outer circumferential surface 548 of the annular valve body 54, the part being adjacent to the second surface 546. Alternatively, as another configuration example that is not illustrated, at least a part of the outer circumferential surface 548 of the annular valve body 54 that is adjacent to the second surface 546 may be formed into an R shape.

With the above configuration, since the distance g in the radial direction between the rim portion 62 and the annular valve body 54 is configured to increase from the first surface 545 toward the second surface 546 of the annular valve body 54, the fluid smoothly flows in and out between the annular valve body 54 and the valve-body shroud portion 60 while the valve operation is in a transient state, which makes it possible to further improve the response speed of the annular valve body 54.

Further, a ridge 65 protruding toward the annular valve seat 51 is disposed on the inner circumferential edge of the base portion 61 formed in an annular shape. The annular valve body 54 may be configured such that the second surface 546 of the annular valve body 54 contacts the ridge 65 in the valve-open position, and a gap 66 is formed between the base portion 61 and the second surface 546. Alternatively, as another configuration example that is not illustrated, a ridge protruding toward the base portion 61 may be disposed on the second surface 546 of the annular valve body 54.

With the above configuration, the ridge 65 protruding toward the annular valve seat 51 is disposed on the inner circumferential edge of the base portion 61 of the valve-body shroud portion 60. Due to the interposition of the ridge 65, the gap 66 is formed between the base portion 61 and the second surface 546 of the annular valve body 54 in the valve-open position. In this way, the fluid smoothly flows in and out between the annular valve body 54 and the valve-body shroud portion while the valve operation is in a transient state, which makes it possible to further improve the response speed of the annular valve body 54.

As illustrated in FIGs. 3 and 4, in one configuration example, the valve-body shroud portion 60 is fixed to the valve block body portion 31 by a support portion 67.

Further, the annular valve 50 may further include a sieve portion 68 supported by the support portion 67. The sieve portion 68 is disposed so as to face the working chamber 26 and configured to prevent foreign matters from entering the working chamber 26. For instance, the sieve portion 68 is constituted of a perforated plate member.

The support portion 67, the valve-body shroud portion 60, and the sieve portion 68 may be formed integrally.

The above described annular valve 50 may further include the following configuration.

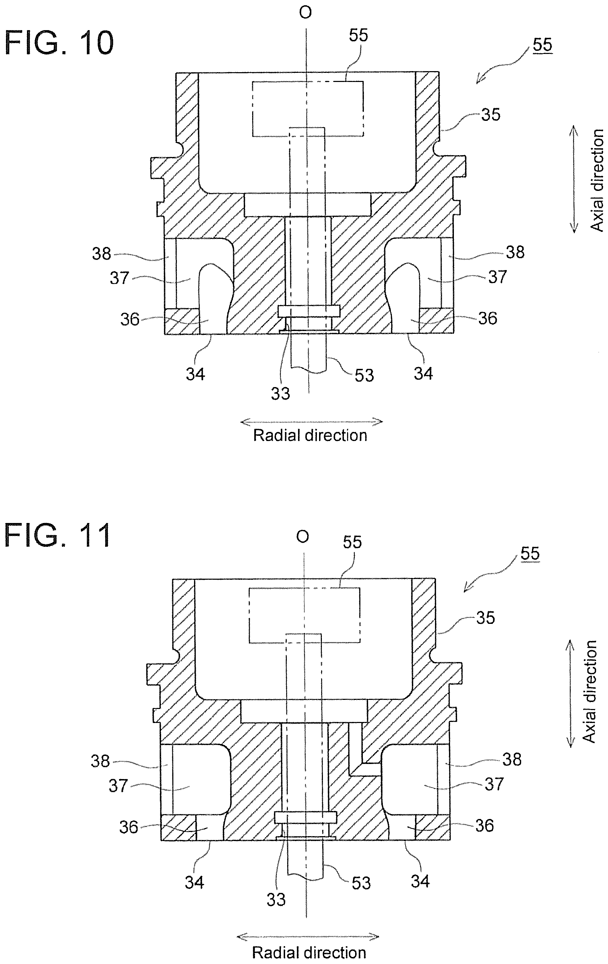

FIG. 9 is a view of a valve casing 35 of the annular valve 50 according to one embodiment, as seen from the side of the annular opening 34. FIG. 10 is a cross-sectional view of the valve casing 35 of the annular valve 50 according to one embodiment, taken along line D-D from FIG. 9. FIG. 11 is a cross-sectional view of the valve casing 35 of the annular valve 50 according to one embodiment, taken along line E-E from FIG. 9.

As illustrated in FIGs. 9 to 11, the annular valve 50 further includes the valve casing 35 including the annular valve seat 51. With reference to the embodiments illustrated in FIGs. 3 and 4, the valve casing 35 may be constituted of the valve block body portion 31, or of the valve block body portion 31 and at least a part of the valve block connection portion 32.

In one embodiment, the valve casing 35 includes an annular groove 36 that forms the annular opening 34 and extends from the annular opening 34 along the center axis toward the opposite side from the annular valve body 54, and a plurality of radial flow channels 37 that extends in the radial direction of the annular opening 34 so as to communicate with the annular groove 36.

The annular groove 36 is formed in an annular shape that is coaxial with the center axis O, extending along the center axis O. The annular opening 34 is formed on one end side of the annular groove 36 in the axial direction, and the other end side communicates with the plurality of radial flow channels 37.

The plurality of radial flow channels 37 is arranged in a radial fashion, centered at the center axis O. An end of each radial flow channel 37 adjacent to the center axis O communicates with the annular groove 36.

With the above configuration, the valve casing 35 includes the annular groove 36 that forms the annular opening 34 and extends along the center axis, and the plurality of radial flow channels 37 that extends in the radial direction of the annular opening 34 so as to communicate with the annular groove 36. Thus, it is possible to secure a space for placing the valve-body moving unit 55 securely around the end portion of the rod on a side opposite to where the annular valve body 54 is fixed.

Further, the annular groove 36 may have a diffuser shape such that the cross-sectional area of the flow path increases with distance from the annular opening 34. In the illustrated example, the width of the annular groove 36 smoothly increases with distance from the annular opening 34. The width 36 of the annular groove is a distance between the inner circumferential wall and the outer circumferential wall of the annular groove 36 in the radial direction.

Since the annular groove 36 has a cross-sectional area of the flow path that increases with distance from the annular opening 34, smooth discharge or introduction of the fluid in the annular valve 50 is enabled.

In one embodiment, the valve casing 35 further includes an annular flow channel 38 that is disposed radially outside the plurality of radial flow channels 37 and communicates with the plurality of radial flow channels 37.

In this case, the area of the cross section of the annular flow channel 38 orthogonal to the center axis O may be equal to or more than the area of the opening of the annular opening 34. The annular flow channel 38 is disposed radially outside the annular groove 36 at which the annular opening 34 is formed.

Since the valve casing 35 includes the annular flow channel 38 communicating with the plurality of radial flow channels 37, and the area of the cross section of the annular flow channel orthogonal to the center axis O is equal to or more than the area of the opening of the annular opening 34, smooth discharge or introduction of the fluid in the annular valve 50 is enabled.

Further, the area of the cross section of the flow path of each of the radial flow channels 37 may be 1/4 or more of the area of the cross section of the annular flow channel 38 orthogonal to the center axis O.

Since the valve casing 35 includes the annular flow channel 38 communicating with the plurality of radial flow channels 37, and the area of cross section of the flow path of each of the plurality of radial flow channels 37 is 1/4 or more of the area of the cross section of the annular flow channel 38 orthogonal to the center axis O, smooth discharge or introduction of the fluid in the annular valve 50 is enabled.

For instance, in the low-pressure valve 50 of the hydraulic motor 7 (see FIGs. 3 and 4), it is important to discharge low-pressure working oil after having performed work smoothly. The low-pressure working oil flows through the annular opening 34, the annular groove 36, the radial flow channels 37, and the annular flow channel 38 in this order. Thus, with the area of cross section of the flow path being larger toward the downstream side, it is possible to discharge the working oil from the working chamber 26 (see FIGs. 3 and 4) smoothly.

The high-pressure valve 70 may further include the following configuration.

In one embodiment, the high-pressure valve 70 is the annular valve 50 disposed adjacently to the low-pressure valve 50, including an annular valve seat 71, a rod 73, an annular valve body 74, and a valve-body moving unit 75. The valve block 30 includes a high-pressure inner flow channel 18d that has a donut shape surrounding the periphery of the high-pressure valve 70, so that high-pressure working oil flows into the intermediate chamber 40 from the high-pressure inner flow channel 18d when the high-pressure valve 70 is open.

The high-pressure valve 70 may have configuration similar to that of the above described annular valve (low-pressure valve) 50 selectively.

As described above, according to at least some embodiments of the present invention, it is possible to restrict unstable behaviors of the annular valve 50 such as delay in the motion (e.g. delay in opening or closing) of the annular valve 50 and unintended motion, and to restrict damage to the annular valve 50.

Further, with the power generating apparatus of renewable-energy type 1 being equipped with the annular valve 50 of the above described embodiment, a trouble of the annular valve 50 is less likely to occur in at least one of the hydraulic pump 6 or the hydraulic motor 7, which enables stable operation of the power generating apparatus of renewable-energy type 1.

Embodiments of the present invention were described in detail above, but the present invention is not limited thereto, and various amendments and modifications may be implemented.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. An annular valve (50, 70), comprising:
an annular valve seat (51) including a seat portion (52) formed by an outer circumferential edge (34a) and an inner circumferential edge (34b) of an annular opening (34);
a rod (53) configured to be movable along a direction orthogonal to the seat portion (52);
an annular valve body (54) disposed so as to face the annular valve seat (51) and fixed to the rod (53); and
a valve-body moving unit (55) for moving the annular valve body (54) between
a valve-closed position in which the annular valve body (54) contacts the seat portion (52) of the annular valve seat (51) so that the annular opening (34) is closed by the annular valve body (54), and
a valve-open position in which the annular valve body (54) is positioned away from the seat portion (52) of the annular valve seat (51) so that the annular opening (34) is open,
wherein the annular valve body (54) includes a first surface (545) facing the annular valve seat (51) and a second surface (546) disposed opposite to the first surface (545), the first surface (545) being flat and parallel to a radial direction of the annular opening (34),
wherein the seat portion (52) of the annular valve seat (51) is configured to be in surface contact with the flat first surface (545) of the annular valve body (54) in the valve-closed position in a first annular region (52a) including the outer circumferential edge (34a) of the annular opening (34) and in a second annular region (52b) including the inner circumferential edge (34b) of the annular opening (34),
**characterized in that** the annular valve body (54) further comprises a valve-body shroud portion (60) disposed opposite to the annular valve seat (51) across the annular valve body (54) in an axial direction of the annular opening (34), the valve-body shroud portion (60) being configured to cover the second surface (546) and an outer circumferential surface (548) of the annular-valve body (54) at least partially in the valve-open position such that the annular valve body (54) is restricted from being forced toward the annular valve seat (51) by fluid flow passing through the annular valve (50, 70),
wherein the valve-body shroud portion (60) includes: a base portion (61) having an annular shape and being disposed so as to face the second surface (546) of the annular valve body (54); and a rim portion (62) protruding toward the annular valve seat (51) from an outer circumferential edge of the base portion (61), and
wherein a distance (g) in a radial direction between an inner circumferential edge (62a1) of a tip end surface (62a) of the rim portion (62) and the outer circumferential surface (548) of the annular valve body (54) increases toward the second surface (546) from the first surface (545) of the annular valve body (54).

2. The annular valve (50, 70) according to claim 1,
wherein the annular valve body (54) includes:
a valve-body portion (541) which is in surface contact with the first annular region (52a) and the second annular region (52b) of the seat portion (52) in the valve-closed position;
a fixed portion (542) fixed to the rod (53); and
a connection portion (543) which connects the valve-body portion (541) and the fixed portion (542), the connection portion (543) having a spring constant of 9kN/mm or more in a direction along the rod (53).

3. The annular valve (50, 70) according to claim 2,
wherein the connection portion (543) includes a plurality of connection arms (543a) connecting the fixed portion (542) and the valve-body portion (541), the connection arms (543a) being disposed at different positions in a circumferential direction, and
wherein each of the plurality of connection arms (543a) extends linearly.

4. The annular valve (50, 70) according to any one of claims 1 to 3,
wherein a relationship of d ≤ 0.05t is satisfied when the annular valve body (54) is in the valve-open position, where d is a distance between a tip end surface of the rim portion (62) and a surface of the annular valve body (54) at an outer circumferential edge portion (549), along a center axis of the annular opening (34), and t is a thickness of the annular valve body (54) at the outer circumferential edge portion (549).

5. The annular valve (50, 70) according to any one of claims 1 to 4,
wherein a gap is formed between an inner circumferential surface of the rim portion (62) and an outer circumferential surface of the annular valve body (54) when the annular valve body (54) is in the valve-open position, and
wherein the gap has a size of 0.005D or more, where D is an outer diameter of the annular valve body (54).

6. The annular valve (50, 70) according to any one of claims 1 to 5,
wherein a root portion (62c) of the rim portion (62) is configured such that a thickness of the root portion (62c) increases toward the base portion (61).

7. The annular valve (50, 70) according to any one of claims 1 to 6,
wherein a ridge (65) protruding toward the annular valve seat (51) is disposed on an inner circumferential edge (62al) of the base portion (61), and
wherein the second surface (546) of the annular valve body (54) contacts the ridge (65) in the valve-open position and a gap is formed between the base portion (61) and the second surface (546).

8. The annular valve (50, 70) according to any one of claims 1 to 7,
wherein the second surface (546) includes an inclined region (547) which inclines with respect to the radial direction, and
wherein the second surface (546) is inclined with respect to the radial direction in the inclined region (547) so that a thickness of the annular valve body (54) increases inwardly in the radial direction.

9. The annular valve (50, 70) according to any one of claims 1 to 8, further comprising
a valve casing (35) including the annular valve seat (51),
wherein the valve casing (35) includes:
an annular groove (36) forming the annular opening and extending from the annular opening (34) along a center axis of the annular (34) opening toward a side opposite from the annular valve body (54); and
a plurality of radial flow channels (37) extending along a radial direction of the annular opening (34) so as to communicate with the annular groove (36).

10. The annular valve (50, 70) according to claim 9,
wherein the annular groove (36) has a diffuser shape such that a cross-sectional area of a flow path increases with distance from the annular opening (34).

11. The annular valve (50, 70) according to claim 9 or 10,
wherein the valve casing (35) further includes an annular flow channel (38) disposed radially outside the plurality of radial flow channels (37), the annular flow channel (38) communicating with the plurality of radial flow channels (37), and
wherein an area of a cross section of the annular flow channel (38), the cross section being orthogonal to the center axis, is not less than an opening area of the annular opening (34).

12. The annular valve (50, 70) according to any one of claims 9 to 11,
wherein the valve casing (35) further includes an annular flow channel (38) disposed radially outside the plurality of radial flow channels (37), the annular flow channel (38) communicating with the plurality of radial flow channels (37), and
a cross-sectional area of a path of each of the plurality of radial flow channels (37) is not less than 1/4 times an area of a cross section of the annular flow channel (38), the cross section being orthogonal to the center axis.

13. A power generating apparatus of renewable-energy type (1), comprising:
a rotor (5) configured to rotate by receiving renewable energy;
a hydraulic pump (6) configured to be driven by the rotor (5) to increase a pressure of working fluid;
a hydraulic motor (7) configured to be driven by the working fluid; and
a generator (10) configured to be driven by the hydraulic motor (7),
wherein at least one of the hydraulic pump (6) or the hydraulic motor (7) includes: a working chamber (26) formed by a cylinder (22) and a piston (24) which is reciprocable in the cylinder (22); an inner flow channel (16, 18) configured to be capable of bringing the working chamber (26) into communication with an outer flow channel (8, 9) disposed between the hydraulic pump (6) and the hydraulic motor (7); and the annular valve (50, 70) according to any one of claims 1 to 12 disposed in the inner flow channel (16, 18) and configured to be capable of switching a communication state between the working chamber (26) and the outer flow channel (8, 9).

## Patentansprüche

1. Ringförmiges Ventil (50, 70), das Folgendes umfasst:
einen ringförmigen Ventilsitz (51), der einen Sitzabschnitt (52) beinhaltet, der durch eine äußere Umfangskante (34a) und eine innere Umfangskante (34b) einer ringförmigen Öffnung (34) gebildet wird;
eine Stange (53), die dazu ausgelegt ist, entlang einer Richtung orthogonal zum Sitzabschnitt (52) bewegbar zu sein;
einen ringförmigen Ventilkörper (54), der angeordnet ist, um dem ringförmigen Ventilsitz (51) zugewandt zu sein, und an der Stange (53) befestigt ist; und
eine Ventilkörperbewegungseinheit (55) zum Bewegen des ringförmigen Ventilkörpers (54) zwischen
einer geschlossenen Ventilposition, in der der ringförmige Ventilkörper (54) den Sitzabschnitt (52) des ringförmigen Ventilsitzes (51) berührt, derart, dass die ringförmige Öffnung (34) durch den ringförmigen Ventilkörper (54) geschlossen wird, und
einer geöffneten Ventilposition, in der der ringförmige Ventilkörper (54) vom Sitzabschnitt (52) des ringförmigen Ventilsitzes (51) weg positioniert ist, derart, dass die ringförmige Öffnung (34) geöffnet ist,
wobei der ringförmige Ventilkörper (54) eine erste Fläche (545), die dem ringförmigen Ventilsitz (51) zugewandt ist, und eine zweite Fläche (546), die gegenüber der ersten Fläche (545) angeordnet ist, beinhaltet, wobei die erste Fläche (545) eben ist und parallel zu einer Radialrichtung der ringförmigen Öffnung (34) verläuft,
wobei der Sitzabschnitt (52) des ringförmigen Ventilsitzes (51) dazu ausgelegt ist, in der geschlossenen Ventilposition in einer ersten ringförmigen Region (52a), die die äußere Umfangskante (34a) der ringförmigen Öffnung (34) beinhaltet, und in einer zweiten ringförmigen Region (52b), die die innere Umfangskante (34b) der ringförmigen Öffnung (34) beinhaltet, mit der ebenen ersten Fläche (545) des ringförmigen Ventilkörpers (54) in Flächenkontakt zu sein,
**dadurch gekennzeichnet, dass** der ringförmige Ventilkörper (54) ferner einen Ventilkörperverkleidungsabschnitt (60) umfasst, der gegenüber dem ringförmigen Ventilsitz (51) über den ringförmigen Ventilkörper (54) in einer Axialrichtung der ringförmigen Öffnung (34) angeordnet ist, wobei der Ventilkörperverkleidungsabschnitt (60) dazu ausgelegt ist, die zweite Fläche (546) und eine äußere Umfangsfläche (548) des ringförmigen Ventilkörpers (54) in der geöffneten Ventilposition mindestens teilweise abzudecken, derart, dass der ringförmige Ventilkörper (54) durch einen Fluidstrom, der durch das ringförmige Ventil (50, 70) geleitet wird, nicht zum ringförmigen Ventilsitz (51) hin gedrängt werden kann,
wobei der Ventilkörperverkleidungsabschnitt (60) Folgendes beinhaltet: einen Basisabschnitt (61), der eine Ringform aufweist und derart angeordnet ist, dass er der zweiten Fläche (546) des ringförmigen Ventilkörpers (54) zugewandt ist; und einen Randabschnitt (62), der von einer äußeren Umfangskante des Basisabschnitts (61) zum ringförmigen Ventilsitz (51) hin vorsteht, und
wobei sich ein Abstand (g) in einer Radialrichtung zwischen einer inneren Umfangskante (62a1) einer Spitzenendenfläche (62a) des Randabschnitts (62) und der äußeren Umfangsfläche (548) des ringförmigen Ventilkörpers (54) von der ersten Fläche (545) zur zweiten Fläche (546) des ringförmigen Ventilkörpers (54) erhöht.

2. Ringförmiges Ventil (50, 70) nach Anspruch 1,
wobei der ringförmige Ventilkörper (54) Folgendes beinhaltet:
einen Ventilkörperabschnitt (541), der in der geschlossenen Ventilposition mit der ersten ringförmigen Region (52a) und der zweiten ringförmigen Region (52b) des Sitzabschnitts (52) in Flächenkontakt ist;
einen festen Abschnitt (542), der an der Stange (53) befestigt ist; und
einen Verbindungsabschnitt (543), der den Ventilkörperabschnitt (541) und den festen Abschnitt (542) verbindet, wobei der Verbindungsabschnitt (543) in einer Richtung entlang der Stange (53) eine Federkonstante von 9kN/mm oder mehr aufweist.

3. Ringförmiges Ventil (50, 70) nach Anspruch 2,
wobei der Verbindungsabschnitt (543) eine Vielzahl von Verbindungsarmen (543a) beinhaltet, die den festen Abschnitt (542) und den Ventilkörperabschnitt (541) verbinden, wobei die Verbindungsarme (543a) in einer Umfangsrichtung in verschiedenen Positionen angeordnet sind, und
wobei sich jeder der Vielzahl von Verbindungsarmen (543a) linear erstreckt.

4. Ringförmiges Ventil (50, 70) nach einem der Ansprüche 1 bis 3,
wobei eine Beziehung von d ≤ 0,05t erfüllt ist, wenn sich der ringförmige Ventilkörper (54) in der geöffneten Ventilposition befindet, wo d ein Abstand zwischen einer Spitzenendenfläche des Randabschnitts (62) und einer Fläche des ringförmigen Ventilkörpers (54) an einem äußeren Umfangskantenabschnitt (549) entlang einer Mittelachse der ringförmigen Öffnung (34) ist, und t eine Dicke des ringförmigen Ventilkörpers (54) am äußeren Umfangskantenabschnitt (549) ist.

5. Ringförmiges Ventil (50, 70) nach einem der Ansprüche 1 bis 4,
wobei zwischen einer inneren Umfangsfläche des Randabschnitts (62) und einer äußeren Umfangsfläche des ringförmigen Ventilkörpers (54) ein Spalt gebildet ist, wenn sich der ringförmige Ventilkörper (54) in der geöffneten Ventilposition befindet, und
wobei der Spalt eine Größe von 0,005D oder mehr aufweist, wo D ein Außendurchmesser des ringförmigen Ventilkörpers (54) ist.

6. Ringförmiges Ventil (50, 70) nach einem der Ansprüche 1 bis 5,
wobei ein Wurzelabschnitt (62c) des Randabschnitts (62) derart ausgelegt ist, dass sich eine Dicke des Randabschnitts (62c) zum Basisabschnitt (61) hin erhöht.

7. Ringförmiges Ventil (50, 70) nach einem der Ansprüche 1 bis 6,
wobei eine Erhöhung (65), die zum ringförmigen Ventilsitz (51) hin vorsteht, an einer inneren Umfangskante (62a1) des Basisabschnitts (61) angeordnet ist, und
wobei die zweite Fläche (546) des ringförmigen Ventilkörpers (54) die Erhöhung (65) in der geöffneten Ventilposition berührt und zwischen dem Basisabschnitt (61) und der zweiten Fläche (546) ein Spalt gebildet ist.

8. Ringförmiges Ventil (50, 70) nach einem der Ansprüche 1 bis 7,
wobei die zweite Fläche (546) eine geneigte Region (547) beinhaltet, die sich mit Bezug auf die Radialrichtung neigt, und
wobei die zweite Fläche (546) mit Bezug auf die Radialrichtung in der geneigten Region (547) derart geneigt ist, dass sich eine Dicke des ringförmigen Ventilkörpers (54) in die Radialrichtung nach innen erhöht.

9. Ringförmiges Ventil (50, 70) nach einem der Ansprüche 1 bis 8, das ferner Folgendes umfasst
ein Ventilgehäuse (35), das den ringförmigen Ventilsitz (51) beinhaltet,
wobei das Ventilgehäuse (35) Folgendes beinhaltet:
eine Ringnut (36), die die ringförmige Öffnung bildet und sich von der ringförmigen Öffnung (34) entlang einer Mittelachse der ringförmigen Öffnung (34) zu einer Seite gegenüber dem ringförmigen Ventilkörper (54) hin erstreckt; und
eine Vielzahl von radialen Strömungskanälen (37), die sich entlang einer Radialrichtung der ringförmigen Öffnung (34) erstrecken, um mit der Ringnut (36) zu kommunizieren.

10. Ringförmiges Ventil (50, 70) nach Anspruch 9,
wobei die Ringnut (36) eine Diffusorform aufweist, derart, dass sich ein Querschnittsbereich eines Strömungspfades mit einem Abstand von der ringförmigen Öffnung (34) erhöht.

11. Ringförmiges Ventil (50, 70) nach Anspruch 9 oder 10,
wobei das Ventilgehäuse (35) ferner einen ringförmigen Strömungskanal (38) beinhaltet, der radial außerhalb der Vielzahl von radialen Strömungskanälen (37) angeordnet ist, wobei der ringförmige Strömungskanal (38) mit der Vielzahl von radialen Strömungskanälen (37) kommuniziert, und
wobei ein Bereich eines Querschnitts des ringförmigen Strömungskanals (38) nicht kleiner ist als ein Öffnungsbereich der ringförmigen Öffnung (34), wobei der Querschnitt orthogonal zur Mittelachse steht.

12. Ringförmiges Ventil (50, 70) nach einem der Ansprüche 9 bis 11,
wobei das Ventilgehäuse (35) ferner einen ringförmigen Strömungskanal (38) beinhaltet, der radial außerhalb der Vielzahl von radialen Strömungskanälen (37) angeordnet ist, wobei der ringförmige Strömungskanal (38) mit der Vielzahl von radialen Strömungskanälen (37) kommuniziert, und
ein Querschnittsbereich eines Pfades jedes der Vielzahl von radialen Strömungskanälen (37) ist nicht kleiner als 1/4 eines Bereichs eines Querschnitts des ringförmigen Strömungskanals (38), wobei der Querschnitt orthogonal zur Mittelachse steht.

13. Stromerzeugungsvorrichtung für erneuerbare Energie (1), die Folgendes umfasst:
einen Rotor (5), der dazu ausgelegt ist, sich durch Empfangen von erneuerbarer Energie zu drehen;
eine Hydraulikpumpe (6), die dazu ausgelegt ist, vom Rotor (5) angetrieben zu werden, um einen Druck eines Arbeitsfluids zu erhöhen;
einen hydraulischen Motor (7), der dazu ausgelegt ist, vom Arbeitsfluid angetrieben zu werden; und
einen Generator (10), der dazu ausgelegt ist, vom hydraulischen Motor (7) angetrieben zu werden,
wobei mindestens eines der Hydraulikpumpe (6) oder des hydraulischen Motors (7) Folgendes beinhaltet: eine Arbeitskammer (26), die durch einen Zylinder (22) und einen Kolben (24), der sich im Zylinder (22) hin und her bewegen kann, gebildet wird; einen inneren Strömungskanal (16, 18), der dazu ausgelegt ist, in der Lage zu sein, die Arbeitskammer (26) mit einem äußeren Strömungskanal (8, 9), der zwischen der Hydraulikpumpe (6) und dem hydraulischen Motor (7) angeordnet ist, in Kommunikation zu bringen; und das ringförmige Ventil (50, 70) nach einem der Ansprüche 1 bis 12, das im inneren Strömungskanal (16, 18) angeordnet und dazu ausgelegt ist, in der Lage zu sein, einen Kommunikationszustand zwischen der Arbeitskammer (26) und dem äußeren Strömungskanal (8, 9) umzuschalten.

## Revendications

1. Vanne annulaire (50, 70) comprenant :
un siège de vanne annulaire (51) comprenant une partie de siège (52) formée par un bord circonférentiel externe (34a) et un bord circonférentiel interne (34b) d'une ouverture annulaire (34) ;
une tige (53) configurée pour être mobile le long d'une direction orthogonale à la partie de siège (52) ;
un corps de vanne annulaire (54) disposé afin de faire face au siège de vanne annulaire (51) et fixé à la tige (53) ; et
une unité de déplacement de corps de vanne (55) pour déplacer le corps de vanne annulaire (54) entre :
une position fermée de vanne dans laquelle le corps de vanne annulaire (54) est en contact avec la partie de siège (52) du siège de vanne annulaire (51) de sorte que l'ouverture annulaire (34) est fermée par le corps de vanne annulaire (54), et
une position ouverte de vanne dans laquelle le corps de vanne annulaire (54) est positionné à distance de la partie de siège (52) du siège de vanne annulaire (51) de sorte que l'ouverture annulaire (34) est ouverte,
dans laquelle le corps de vanne annulaire (54) comprend une première surface (545) faisant face au siège de vanne annulaire (51) et une seconde surface (546) disposée à l'opposé de la première surface (545), la première surface (545) étant plate et parallèle à une direction radiale de l'ouverture annulaire (34),
dans laquelle la partie de siège (52) du siège de vanne annulaire (51) est configurée pour être en contact de surface avec la première surface plate (545) du corps de vanne annulaire (54) dans la position fermée de vanne dans une première région annulaire (52a) comprenant le bord circonférentiel externe (34a) de l'ouverture annulaire (34) et dans une seconde région annulaire (52b) comprenant le bord circonférentiel interne (34b) de l'ouverture annulaire (34),
**caractérisée en ce que** le corps de vanne annulaire (54) comprend en outre une partie de flasque de corps de vanne (60) disposée à l'opposé du siège de vanne annulaire (51) d'un côté à l'autre du corps de vanne annulaire (54) dans une direction axiale de l'ouverture annulaire (34), la partie de flasque de corps de vanne (60) étant configurée pour recouvrir la seconde surface (546) et une surface circonférentielle externe (548) du corps de vanne annulaire (54) au moins partiellement dans la position ouverte de vanne de sorte que le corps de vanne annulaire (54) ne peut pas être forcé vers le siège de vanne annulaire (51) par l'écoulement de fluide passant par la vanne annulaire (50, 70),
dans laquelle la partie de flasque de corps de vanne (60) comprend : une partie de base (61) ayant une forme annulaire et étant disposée afin de faire face à la seconde surface (546) du corps de vanne annulaire (54) ; et une partie de rebord (62) faisant saillie vers le siège de vanne annulaire (51) à partir d'un bord circonférentiel externe de la partie de base (61), et
dans laquelle une distance (g) dans une direction radiale entre le bord circonférentiel interne (62a1) d'une surface d'extrémité de pointe (62a) de la partie de rebord (62) et la surface circonférentielle externe (548) du corps de vanne annulaire (54) augmente vers la seconde surface (546) à partir de la première surface (545) du corps de vanne annulaire (54).

2. Vanne annulaire (50, 70) selon la revendication 1,
dans laquelle le corps de vanne annulaire (54) comprend :
une partie de corps de vanne (541) qui est en contact de surface avec la première région annulaire (52a) et la seconde région annulaire (52b) de la partie de siège (52) dans la position fermée de vanne ;
une partie fixe (542) fixée à la tige (53) ; et
une partie de raccordement (543) qui raccorde la partie de corps de vanne (541) et la partie fixe (542), la partie de raccordement (543) ayant une constante de rappel de 9kN/mm ou plus dans une direction le long de la tige (53).

3. Vanne annulaire (50, 70) selon la revendication 2,
dans laquelle la partie de raccordement (543) comprend une pluralité de bras de raccordement (543a) raccordant la partie fixe (542) et la partie de corps de vanne (541), les bras de raccordement (543a) étant disposés dans des positions différentes dans une direction circonférentielle, et
dans laquelle chacun de la pluralité de bras de raccordement (543a) s'étend de manière linéaire.

4. Vanne annulaire (50, 70) selon l'une quelconque des revendications 1 à 3,
dans laquelle une relation de d ≤ 0,05t est satisfaite lorsque le corps de vanne annulaire (54) est dans la position ouverte de vanne, où d est une distance entre la surface d'extrémité de pointe de la partie de rebord (62) et une surface du corps de vanne annulaire (54) au niveau d'une partie de bord circonférentielle externe (549), le long d'un axe central de l'ouverture annulaire (34), et t est une épaisseur du corps de vanne annulaire (54) au niveau de la partie de bord circonférentiel externe (549).

5. Vanne annulaire (50, 70) selon l'une quelconque des revendications 1 à 4,
dans laquelle un espace est formé entre une surface circonférentielle interne de la partie de rebord (62) et une surface circonférentielle externe du corps de vanne annulaire (54) lorsque le corps de vanne annulaire (54) est dans la position ouverte de vanne, et
dans laquelle l'espace a une dimension de 0,005D ou plus, où D est un diamètre externe du corps de vanne annulaire (54).

6. Vanne annulaire (50, 70) selon l'une quelconque des revendications 1 à 5,
dans laquelle une partie d'emplanture (62c) de la partie de rebord (62) est configurée de sorte qu'une épaisseur de la partie d'emplanture (62c) augmente vers la partie de base (61).

7. Vanne annulaire (50, 70) selon l'une quelconque des revendications 1 à 6,
dans laquelle une crête (65) faisant saillie vers le siège de vanne annulaire (51) est disposée sur un bord circonférentiel interne (62a1) de la partie de base (61), et
dans laquelle la seconde surface (546) du corps de vanne annulaire (54) est en contact avec la crête (65) dans la position ouverte de vanne et un espace est formé entre la partie de base (61) et la seconde surface (546).

8. Vanne annulaire (50, 70) selon l'une quelconque des revendications 1 à 7,
dans laquelle la seconde surface (546) comprend une région inclinée (547) qui s'incline par rapport à la direction radiale, et
dans laquelle la seconde surface (546) est inclinée par rapport à la direction radiale dans la région inclinée (547) de sorte qu'une épaisseur du corps de vanne annulaire (54) augmente vers l'intérieur dans la direction radiale.

9. Vanne annulaire (50, 70) selon l'une quelconque des revendications 1 à 8, comprenant en outre :
un carter de vanne (35) comprenant le siège de vanne annulaire (51),
dans laquelle le carter de vanne (35) comprend :
une rainure annulaire (36) formant l'ouverture annulaire et s'étendant à partir de l'ouverture annulaire (34) le long d'un axe central de l'ouverture annulaire (34) vers un côté opposé au corps de vanne annulaire (54) ; et
une pluralité de canaux d'écoulement radiaux (37) s'étendant le long d'une direction radiale de l'ouverture annulaire (34) afin de communiquer avec la rainure annulaire (36).

10. Vanne annulaire (50, 70) selon la revendication 9,
dans laquelle la rainure annulaire (36) a une forme de diffuseur de sorte qu'une surface transversale d'une trajectoire d'écoulement augmente avec la distance par rapport à l'ouverture annulaire (34).

11. Vanne annulaire (50, 70) selon la revendication 9 ou 10,
dans laquelle le carter de vanne (35) comprend en outre un canal d'écoulement annulaire (38) disposé radialement à l'extérieur de la pluralité de canaux d'écoulement radiaux (37), le canal d'écoulement annulaire (38) communiquant avec la pluralité de canaux d'écoulement radiaux (37), et
dans laquelle une surface d'une section transversale du canal d'écoulement annulaire (38), la section transversale étant orthogonale à l'axe central, n'est pas inférieure à une surface d'ouverture de l'ouverture annulaire (34).

12. Vanne annulaire (50, 70) selon l'une quelconque des revendications 9 à 11,
dans laquelle le carter de vanne (35) comprend en outre un canal d'écoulement annulaire (38) disposé radialement à l'extérieur de la pluralité de canaux d'écoulement radiaux (37), le canal d'écoulement annulaire (38) communiquant avec la pluralité de canaux d'écoulement radiaux (37), et
une surface transversale d'une trajectoire de chacun de la pluralité de canaux d'écoulement radiaux (37) n'est pas inférieure à 1/4 fois une surface d'une section transversale du canal d'écoulement annulaire (38), la section transversale étant orthogonale à l'axe central.

13. Appareil de génération d'énergie de type à énergie renouvelable (1) comprenant :
un rotor (5) configuré pour tourner en recevant l'énergie renouvelable ;
une pompe hydraulique (6) configurée pour être entraînée par le rotor (5) afin d'augmenter une pression de fluide de travail ;
un moteur hydraulique (7) configuré pour être entraîné par le fluide de travail ; et
un générateur (10) configuré pour être entraîné par le moteur hydraulique (7),
dans lequel au moins l'un parmi la pompe hydraulique (6) ou le moteur hydraulique (7) comprend : une chambre de travail (26) formée par un cylindre (22) et un piston (24) qui peut effectuer un mouvement de va-et-vient dans le cylindre (22) ; un canal d'écoulement interne (16, 18) configuré pour pouvoir amener la chambre de travail (26) en communication avec un canal d'écoulement externe (8, 9) disposé entre la pompe hydraulique (6) et le moteur hydraulique (7) ; et la vanne annulaire (50, 70) selon l'une quelconque des revendications 1 à 12, disposée dans le canal d'écoulement interne (16, 18) et configurée pour pouvoir commuter un état de communication entre la chambre de travail (26) et le canal d'écoulement externe (8, 9).
